(19) Europäisches Patentamt
European Patent Office
Office européen des brevets

(11) **EP 1 496 014 B1**

(12) **EUROPEAN PATENT SPECIFICATION**

(45) Date of publication and mention
of the grant of the patent:
**30.03.2011  Bulletin 2011/13**

(51) Int Cl.:
***C01B 3/06*** *(2006.01)*   ***B01J 7/02*** *(2006.01)*

(21) Application number: **04014803.3**

(22) Date of filing: **24.06.2004**

(54) **Magnetic containment device for hydrogen generation from alkaline borohydrides**

Magnetische Aufnahmeeinrichtung zur Erzeugung von Wasserstoff aus alkalischen Borohydriden

Dispositif de confinement magnétique pour la production d'hydrogène à partir de borohydrures alcalins

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **25.06.2003  IT RM20030315**

(43) Date of publication of application:
**12.01.2005  Bulletin 2005/02**

(73) Proprietors:
• **De Francesco, Massimo**
  **00125 Roma (IT)**
• **Pozio, Alfonso**
  **00139 Roma (IT)**

(72) Inventors:
• **De Francesco, Massimo**
  **00125 Roma (IT)**
• **Pozio, Alfonso**
  **00139 Roma (IT)**

(74) Representative: **Turini, Laura**
  **Studio Legale Turini**
  **Via Lamarmora 55**
  **50121 Florence (FI) (IT)**

(56) References cited:
**EP-A- 1 354 851     US-B1- 6 358 488**
**US-B1- 6 534 033**

• **AMENDOLA S C ET AL: "An ultrasafe hydrogen generator: aqueous, alkaline borohydride solutions and Ru catalyst" JOURNAL OF POWER SOURCES, ELSEVIER SEQUOIA S.A. LAUSANNE, CH, vol. 85, no. 2, February 2000 (2000-02), pages 186-189, XP004189211 ISSN: 0378-7753**
• **PATENT ABSTRACTS OF JAPAN vol. 2003, no. 09, 3 September 2003 (2003-09-03) & JP 2003 146603 A (SUDA SEIJIRO), 21 May 2003 (2003-05-21)**
• **PATENT ABSTRACTS OF JAPAN vol. 2003, no. 09, 3 September 2003 (2003-09-03) & JP 2003 146605 A (SUDA SEIJIRO), 21 May 2003 (2003-05-21)**
• **PATENT ABSTRACTS OF JAPAN vol. 2002, no. 05, 3 May 2002 (2002-05-03) & JP 2002 029702 A (SUDA SEIJIRO), 29 January 2002 (2002-01-29)**

**Description**

**Technical Field**

The present invention concerns the technical sector relative to the systems and devices for hydrogen generation.

**Background Art**

The main obstacles to the widespread use of hydrogen as energy carrier relates to the unsolved problems of the methods for its storage, transport, distribution and to the choice of the ideal system to produce energy.

One of the most hopeful systems for the use of hydrogen is represented by the fuel cells that, thanks to the feed by this gas, can directly produce electrical energy.

A fuel cell consists of a system capable of producing continuously electrical energy and it's essentially formed by two electrodes divided by an electrolyte. As a matter of fact, differently from the traditional storage and electrical cells, in the fuel cell the reagents $H_2$ and $O_2$ (the latter generally coming from the air) are continuously supplied from the outside and the electrodes are not structurally modified during the reactions, but only represent a support and catalysis of the same reactions. The interest for the fuel cells as electrical energy generators comes from their high performance compared to facilitate their use in the field of transports, as well as in the production for single domestic utilities or for the electrical network. Therefore, it's necessary to find a system for storing and carrying hydrogen, permitting its simple, economical, safe and widespread distribution.

Hydrogen can be stored in different ways: 1) compressed gas, 2) liquefied gas, 3) contained in metallic hydrides, 4) in carbon nano-tubes and 5) in chemical hydrides.

1) The compressed hydrogen is the easiest and most used system, but compared to the traditional fuels (GPL, petrol, methane, etc.) has a low volume density. For example, considering the same volume, hydrogen produces three times less energy than methane and ten times less energy than petrol. It's possible to increase the energetic density of the hydrogen increasing its pressure (but in this case, it's necessary to use reinforced tanks with fibres). Nevertheless, the high costs and the problems relative to security strongly affect this kind of storage.

2) As an alternative, always to increase the energetic density, hydrogen can be liquefied and stored at a temperature of - 253°C. The drawbacks of this system imply possible leaks of liquid hydrogen and the considerable energetic expenditure of the entire process. We must consider that about 30% of hydrogen energy is necessary for the cooling process and, in addition, specific expertness and equipments are necessary for its safe movement.

3) The metallic hydrides are chemical compounds able to absorb and store hydrogen in the interatomic space of metal by means of an exothermic absorption process and to release it, if heating, by endothermic process. The possibilities of hydrogen leaks are not very important and for this reason this technology is considered safe. Nevertheless, the main drawback relates to the low gravimetric density of the stored hydrogen (only 1-7%$_{weight}$). In addition, the operating costs of these systems are usually high, which do not allow yet the realization of trade storing systems.

4) In the field of the nano-technologies, carbon nano-tubes seem to permit, with equal weight, a greater volume of stored hydrogen compared to the metallic hydrides and also relative lower costs. However, in this sector the research is still developing and it's not possible to perform accurate analyses. As a matter of fact, currently, trade systems do not exist.

5) The technology that in future could solve the greatest problems of storage, transport and distribution of hydrogen seems to be the one using chemical hydrides, in particular alkaline hydrides. In this case, the hydrogen is confined in the chemical bonds of boron and alkaline metal forming a salt. An aqueous solution, made e.g. 50%$_w$ by sodium borohydride and 50%$_w$ by water, supplies hydrogen, reacting on a suitable catalyst, with an energetic volume similar to the petrol. Besides the hydrogen, the other product of said reaction is the sodium borate, a natural chemical compound commonly used in detergents that may be transformed again in sodium borohydride. The use of the alkaline borohydrides is not recent: NASA employed them to power the rockets of the shuttles and, at that time, technicians asserted that the sodium borohydride could have been employed as fuel both for military and civil purposes between the end of the XX century and the beginning of the XXI century.

When the borohydride in the water comes into contact with the catalyst, hydrogen is produced, which can be directly sent to the anode of a fuel cell, so getting electrical energy. A solution of 35%$_w$ sodium borohydride holds 7.7%$_w$

of hydrogen. This solution, steady in basic environment, is not flammable, not explosive, it neither produces pollution nor by-products capable of causing the greenhouse effect and finally it's the only system for storing hydrogen in liquid form (aqueous) at a room temperature that could easily employ the current distribution system to the pump for the self-pulling.

On the other hand, the problems to solve are:

A) the current high cost of the borohydrides (which however could be reduced recycling the produced borate);

B) the realization of a good process of re-conversion borohydride-borate-borohydride;

C) the improvement of the catalyst both in the reaction kinetics and in the chemical stability.

The present invention principally aims at solving this last problem C), solving the problem to control the kinetics of production of hydrogen and the chemical stability of the analysed catalysts.

The sodium borohydride is a crystalline white salt, thermally steady and hygroscopic, which decomposes for hydrolysis according to the following exothermic reaction:

$$NaBH_4 + 2\,H_2O \;\rightarrow\; NaBO_2 + 4\,H_2 \qquad\qquad (1)$$

The speed of decomposition of the aqueous solutions of borohydride is conveniently assessed by the following equation (Mochalo et al., Kinet. Katal. 6, 1965, 541) expressed in its half-life (necessary time for the hydrolysis of $50\%_w$ of the first borohydride) according to the pH and the temperature:

$$\log_{10} t_{1/2} = pH - (0.034\,T - 1.92) \qquad\qquad (2)$$

where $t_{1/2}$ is indicated in minutes and T in Kelvin degrees. Thus the (2) can be controlled varying the acidity and/or the temperature. The total hydrolysis of 1 gram of borohydride releases 2.3741 of hydrogen in standard conditions (STP), with a kinetics that in a short time decelerates for the rise of the pH caused by the creation of the metaborate basic salt. Suitable steady aqueous solutions for hydrogen generation are included in the range of concentration of $1\text{-}30\%_w$ of $NaBH_4$ and NaOH or KOH with concentrations greater than $5\%_w$.

Studies by James et al. (Progr. Inorg. Chem. 11, 1970, 97) revealed that suitable metal salts, such as nickel and cobalt, and noble metals, such as ruthenium, platinum, rhodium, iridium, etc. are effective catalytic accelerators of the reaction (1). The US patent No. 6,534,033 by Amendola et al. (Millenium Cell) describes the preparation of a catalyst of metallic ruthenium supported on anionic resin (IRA-400). The latter should facilitate the catch of the borohydride ion ($BH_4^-$) near the ruthenium, increasing its contact time and therefore the hydrolysis kinetics, which is in fact high. Unfortunately, both the anionic resin and the ruthenium are not steady at the high pH values considered. The resin, at first present in small balls, eventually tends to dissolve, the ruthenium detaches from the resin for the tensions produced to its interface during the development of the hydrogen. What's more important, the same ruthenium dissolves due to the strong corrosive alkaline power, as it has already been tested by M. Pourbaix (Atlas d'Equilibres Electrochimiques, Gauthier-Villars and C. Editeur, Paris 1963). In the US patent 6,534,033, the catalyst is contained in a reactor equipped, at the top and the base, with filters for keeping the particles of about 0.025 mm diameter, and the solution of $NaBH_4$/$NaOH/H_2O$ is fluxed inside by means of a peristaltic pump through which it's possible to regulate the speed of generation of hydrogen.

In another US patent No. 6,358,488, the Japanese Suda realizes, among the others, two catalysts with nickel powder or nickel-magnesium alloy (granulometry with about 0.025mm diameter); these catalysts are pre-treated by an aqueous bath of hydrofluoric acid-sodium fluoride, so "fluoriding" the surface. The hydrolysis kinetics of the borohydride are at first slow, then they accelerate and after 6 hours of work they reach interesting values anyway lower that the ones of the US patent 6,534,033. There are not data for longer times and however these tests are carried out in a reactor not in flux and we have no information about the chemical stability of this system.

An article published by the Chinese Kojima et al. (Int. Journal of Hydrogen Energy, 27,2002, 10) describes the preparations of "metal/metal oxide" catalysts, such as $Pt/TiO_2$, Pt/CoO and $Pt/LiCoO_2$. The first one of said catalysts gives a good value of conversion of the borohydride into hydrogen, unfortunately this test is carried out in a solution of $NaBH_4/H_2O$ not stabilized with NaOH. In these conditions, the test is altered in that also without catalyst, after one hour, the conversion is already of 7% at 20-23°C. The tests of the catalysts with a base of Pt, supported on cobalt oxides or lithium cobaltites, in a reactor (not in flux conditions) containing solutions of $NaBH_4/NaOH/H_2O$ present kinetics of generation of $H_2$ exceptionally high. Nevertheless, our experimental values have verified the chemical instability of these catalysts that react directly with the borohydride, generating hydrogen and converting into cobalt borides and metallic cobalt slightly divided with a very high surface area. The reported high kinetics is therefore the result of principally redox reactions of the same catalysts. Furthermore, the cobalt borides and metallic cobalt with pH greater than 13 tend to dissolve in the solution and disperse in a device continuously supplied with the solution of borohydride.

**Disclosure of invention**

The first purpose of this invention is the realization of a device that, inserted in the power circuit of aqueous solutions of sodium borohydride/sodium hydroxide, better performs the following three fundamental characteristics:

a) fast kinetics of hydrogen generation;

b) control of the hydrogen volume produced in the unit of time;

c) high chemical stability in time.

The above-mentioned device is essentially made of a magnetic field comprising a part of the line of the power circuit of the solution $NaBH_4/NaOH/H_2O$. The power lines of the magnetic field parallel each other and with homogeneous density carry out their action with a transversal geometry compared to the line of the circuit, crossing its entire volume and for a well-defined length. Inside said length the catalytic material is placed in powder form of variable granulometry, wires, fibres, foils or bars that, besides supporting the hydrolysis reaction of the sodium borohydride for the hydrogen generation, has iron-magnetic properties, so that the intensity of the magnetic field applied out of the circuit is suitable to fulfil one or more of the following operations:

i) Firmly placing the catalytic material in the considered length of circuit, without any leakage due to the dragging by the power solution or to the turbulence caused by the creation of hydrogen gas balls on its surface.

ii) Transferring the magnetic field acting on a length of the circuit to another length, carrying together the catalytic material without any leakage.

iii) Removing the magnetic field from the circuit at the end of the process in order to facilitate the retrieval of the catalytic material or, during the process, removing the magnetic field from one of the two lines of a system with by-pass.

iv) Inserting in the power circuit a variable known quantity of catalytic material in order to get enough quantity of hydrogen generated in the unit of time.

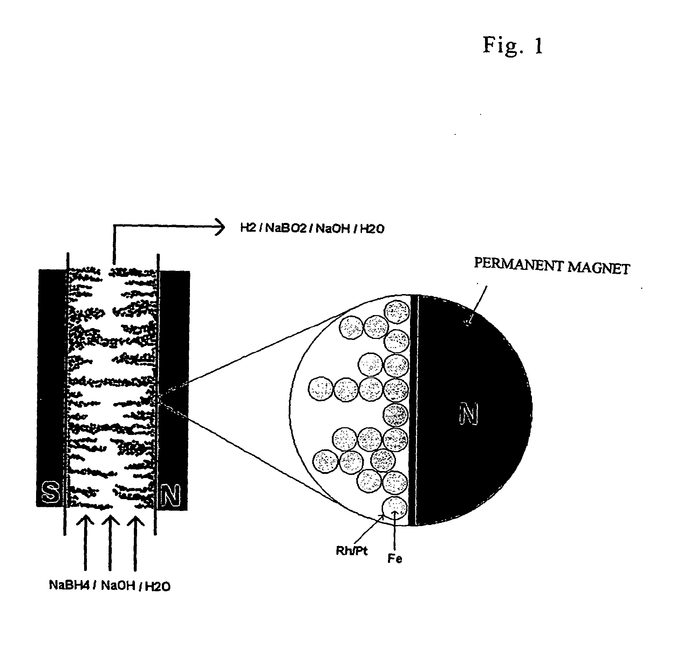

The magnetic containment device we have realized (Fig. 1) principally, but not exclusively, uses permanent trade magnets with a work temperature of at least 100°C, available on the market at low costs. The most suitable ones are couples of magnets of type Neodymium-Iron-Boron with flat-parallel surfaces with axial bipolar geometry that, in contact with the power line, appear faraway from few millimetres to some centimetres and provide a field intensity ranging from 1 to 5 kGauss, according to the material forming the circuit placed between the two magnetic poles and to its thickness. Preferably, the magnets, shaped like a parallelepiped, must be long and large enough to cover the considered length of circuit and the surfaces, from which the power lines leave, with an area greater than, or at least as equal as, the longitudinal section of the same length where we want to contain the catalytic material, so as to present a magnetic field as more homogeneous as possible.

The possibility to move the magnetic field from a length of the circuit to another, or its partial or total removal, can be obtained by means of simple mechanical systems (which can be applied to small portable hydrogen generators in order to power fuel mini-cells of a few Watts), or by electromechanical checks for assisted hydrogen generation (in military field or in domestic utility, powers until hundreds of kW).

The benefits of our magnetic containment device compared to the previous hydrogen generation systems from solutions of alkaline borohydrides are:

A) The loading, movement and retrieval of the catalytic material are completely safe operations carried out by the user.

B) Acting on the external magnetic field, it's possible to vary the quantity of catalytic material that comes into contact in the unit of time with the solution of $NaBH_4/NaOH/H_2O$, therefore on the quantity of produced hydrogen.

C) High performance on the hydrogen generation, since the catalytic material, spontaneously placed along the power lines of the magnetic field, shows its greatest surface for the hydrolysis reaction (1).

D) A filter container is not necessary to keep the catalytic material in powder, therefore the local pressure drops are minimized.

E) In the case that, during the catalysis process, the granulometry of the catalytic material becomes thinner, the produced powder would however remain well contained into the magnetic field without any leakage and thus always capable of supporting the catalytic reaction.

F) It's possible to vary the intensity and the direction of the magnetic field applied, making the catalytic material swing, with alternative motion, even if remaining in its position, so that the small gas balls produced on its surface detach earlier, releasing the active sites for the catalysis with the result of further accelerating the hydrolysis kinetics. The rotation of a small angle of a couple of permanent magnets, around the length of a circuit, can be obtained by a pulsed electromagnetic system, whose magnetic field acts with an attraction-rejection power directly on the same magnets; this system can be applied also to devices with a single magnets if the diameter of the length of the circuit is quite small (few millimetres).

G) For magnetic containment devices adopted on circuits of process for hydrogen generation on medium and large scale, the solution of using electromagnetic coil components can be considered economically valid.

A second purpose of this invention, not less important that the first one, is the preparation of catalysts for hydrogen generation from alkaline borohydrides specifically studied to be used in the magnetic containment devices previously described. The catalyst must have three essential requisites: 1) it must have iron-magnetic properties, 2) it must have high chemical stability in time, 3) it must perform a suitable kinetics for hydrogen generation.

Iron-magnetic properties are included in several metallic elements and their alloys, such as iron, cobalt, nickel, gadolinium, iron-chromium alloys, stainless steel series AISI 400, some rare-earth oxides, magnetite ($Fe_3O_4$). However, the considerable reducing condition and the high pH of the solution $NaBH_4/NaOH/H_2O$, restricts the choice of the iron-magnetic material. As a matter of fact, among the cited elements, the iron is poorly damaged by the alkaline attack because it forms a very thin cover of oxide (FeO), but after a few time iron hydroxide appears. Also the nickel suffers from the alkaline attack, but the presence of the borohydride causes the transformation of nickel oxide into nickel boride, which is no more iron-magnetic and tends to slightly dissolve. Cobalt and cobalt oxides strongly dissolve. Rare-earth oxides dissolve when in contact with alkalis. Magnetite dissolves only in surface the iron component FeO, leaving the steady iron oxide $Fe_2O_3$, but the latter is reduced by the borohydride causing the destruction of the crystal lattice. The steels series AISI 400 tend in time to become fragile, due to the diffusion of hydrogen under their surface, involving tensions and breaks. Therefore, the iron-magnetic material selected for the preparation of our catalysts results the metallic iron (in powder, wire, fibre, foil, bar) pre-treated in surface in order to avoid its slow oxidation in time.

We know that some noble metals perform catalytic action to the hydrolysis reaction of the alkaline borohydride. These metals are herein listed in decreasing order by their catalytic activity: ruthenium, rhodium, platinum, cobalt. In particular, at equal conditions, ruthenium performs an activity almost double than rhodium. We have already seen in previous patents that ruthenium tends to dissolve in alkaline conditions, which do not imply for rhodium and platinum. As a matter of fact, from the above-mentioned Pourbaix diagrams and examining the relative redox potentials, only rhodium and platinum can be considered, as they have more positive values:

$$Co(OH)_2 + 2\ e^- \leftrightarrows Co + 2\ OH^- \qquad E° = -0.73\ V$$
$$Ru(OH)_4 + 4e^- \leftrightarrows Ru + 4\ OH^- \qquad E° = -0.15\ V$$
$$Rh(OH)_3 + 3\ e^- \leftrightarrows Rh + 3\ OH^- \qquad E° = +0.00\ V$$
$$Pt(OH)_2 + 2\ e^- \leftrightarrows Pt + 2\ OH^- \qquad E° = +\ 0.14\ V$$

Therefore, in order to obviate the lower catalytic activity of rhodium and platinum, we have chosen to use a powder iron-magnetic support with granulometry of about 10 microns against the 25 of the above-mentioned Amendola's patent (catalyst IRA-400/Ru 5%$_w$): this is made possible thanks to the magnetic containment device object of this invention, which permits to keep in active position the smallest catalyst particle.

*Examples for the preparation of the catalyst:*

The catalyst, studied and realized specifically for the magnetic containment devices of this patent, called Fe94Pt1Rh5 (rates in % by weight Fe:Pt:Rh = 94:1:5), consists of a support material in iron powder with an average granulometry of 10 microns. It is treated in 4 phases: the first one is an acid pickling in order to remove the possible surface iron oxides; in the second phase the iron surface is activated with a single bath of $Pd^{II}Sn^{II}/HCl$ that permits a better metallic plating in the next phases; the third phase involves the metallic plating to protect the iron - the most suitable metals are platinum, gold and silver; the last phase includes the deposition of the catalytically active material, i.e. the rhodium. We are now going to describe an example of this preparation, not exhaustive, entirely performed at a room temperature, getting about 1 gram of final product:

1) Weigh 0.940g of iron powder (about 10 microns of granulometry) and put them in a glass beaker of 50ml.

2) Add 10ml of sulphuric acid $10\%_w$ and shake for one minute. Quickly wash with distilled water holding the powder in the beaker by means of a permanent magnet.

3) Add 10ml of an activating solution $Pd^{II}Sn^{II}$/HCl with composition: HCl conc. 25ml, $PdCl_2$ 0.17g, $SnCl_2 \cdot H_2O$ 12.00 g, $H_2O$ q.b. 250ml. Shake for one minute. Quickly wash with distilled water.

4) Add 20ml of a solution of $NH_4OH$ (2ml conc./L) and shake for 5 minutes. Deeply wash with distilled water.

5) Add 10ml of a solution containing 10mg of platinum like $Pt(NH_3)_4Cl_2 \cdot H_2O$ and 1.00g of sodium hydroxide. Shake for one minute.

6) Add 1ml of an aqueous solution of $NaBH_4$ $20\%_w$/NaOH $10\%_w$. Shake for 10 minutes. Deeply wash with distilled water.

7) Add 10ml of a solution containing 50mg of rhodium like $RhCl_3$ and 1.00g of sodium hydroxide. Shake for 1 minute.

8) Add 5ml of an aqueous solution of $NaBH_4$ $20\%_w$/NaOH $10\%_w$ and shake for 10 minutes. Deeply wash with distilled water.

9) Dry the catalyst Fe94Pt1Rh5 in stove at 105°C for 12 hours.

The catalyst, prepared with the protocol of the above example, takes two tests for hydrogen generation from sodium borohydride. The first one is a static test that permits to compare the hydrolysis kinetics of the new catalyst with the one obtained with the catalyst IRA-400/RuS% by Amendola et al.. The second test is carried out in the above-described magnetic containment device, working in continuous flux, in order to assess its chemical stability in time.
In the static test, 30ml of an aqueous solution of NaBH. 20%-/NaOH 10%, are placed in a flask of 100ml equipped with a filter lid and a small glass tube that conveys the generated gas into a graduated container full of water, upside down and with the mouth dipped into the water held in a third container. The solution placed into the flask has been previously thermostated at 35°C, then we add 0.25g of catalyst Fe94Pt1Rh5.

The second test, relating to the chemical stability, therefore to the catalytic activity in time, has been fulfilled using a couple of faced permanent magnets, whit a magnetic field, of about 1 Kgauss intensity, which had effect on a section of a closed circuit of 16mm diameter and 50mm length. 0.50g of catalyst Fe94Pt1Rh5 have been contained in the above section. A peristaltic pump fluxed, in the closed circuit, the same aqueous solution of 1l of $NaBH_4$ $20\%_w$/NaOH $10\%_w$ at a speed of about 1ml/minute, at a room temperature (22-27°C) for 6 days. Thus, the recovered catalyst has been subjected again to the previous static kinetics test (0.25g cat./T=35°C/V=30ml sol.): the generated hydrogen has been of $6.8cm^3$ $H_2$/sec per gram of catalyst, showing a reduction of just 4% compared with the original kinetics.

**Claims**

1. Reactor for hydrogen generation from alkaline borohydrides, **characterized in that** it comprises:

   a) a magnetic field applied to a length of circuit where the hydrolysis reaction of the alkaline borohydrides is fulfilled;
   b) a catalyst made of material such as iron, cobalt, nickel, gadolinium, iron-chromium alloys, stainless steel series AISI 400, rare-earth oxides, magnetite ($Fe_3O_4$), contained from the magnetic field in the above-mentioned length of circuit, which accelerates the hydrolysis reaction of the alkaline borohydrides;
   c) a solution of borohydride of alkaline metal and alkaline hydroxide flowing in the above-mentioned circuit.

2. Device as claimed in claim 1, **characterized in that** the catalyst is made of powder, wires, fibres, foil or bar.

3. Device as claimed in claim 1 and 2, **characterized in that** said catalyst is made of powder with granulometry from 1 to 50 microns of diameter.

4. Device as claimed in claim 1, **characterized in that** the applied magnetic field is generated by one or more permanent magnets or by one coil electromagnet.

5. Device as claimed in claims 1 and 4, **characterized in that** it comprises mechanical and/or electromechanical systems to vary in time the intensity and the direction of the magnetic field applied, said mechanical and/or electromechanical systems giving to the permanent magnets a continuous or discontinuous movement, alternating and/or swinging on their position .

6. Device as claimed in claims 1, 4 and 5, **characterized in that** said magnetic field applied on a length of circuit has enough intensity to contain the catalyst in the above length, said mechanical and/or electromechanical systems moving said magnetic field to another length carrying together the catalyst and permitting a greater or lesser contact of said catalyst with the solution of alkaline borohydrides, said magnetic field being removable in order to allow the total retrieval of the catalyst.

7. Device as claimed in claims 1, 4, 5 and 6, **characterized in that** it comprises aqueous solutions, said aqueous solutions comprising alkalis and/or alkaline borohydrides

8. Device as claimed in claims 1, 4, 5, 6 and 7, **characterized in that** said aqueous solutions comprises sodium borohydride with concentrations from $0\%_w$ to $50\%_w$ and sodium hydroxide from $0.1\%_w$ to $20\%_w$, , the remaining ratio being water.

9. Device as claimed in claims 1, 4, 5, 6, 7 and 8, **characterized in that** the work temperature is comprised between -5°C and 100°C. .

10. Device as claimed in claims 1, 2 and 3, **characterized in that** the grains of powder are made of a metallic protective plating on the iron-magnetic supporting material, said metallic protective cover being chosen among the metallic elements and their alloys .

11. Device as claimed in claims 1, 2, 3 and 10, **characterized in that** the grains of powder are made of a catalytic surface above the metallic plating, said catalytic surface being chosen among the elements of single noble metals or alloys.

12. Device as claimed in claims 1, 2, 3, 10 and 11, **characterized in that** it comprises $80\text{-}99\%_w$ of supporting metal, $1\text{-}10\%_w$ of protective plating, $0.1\text{-}10\%_w$ of catalytic surface.

**Patentansprüche**

1. Reaktor zur Wasserstofferzeugung aus Alkaliborhydriden, **dadurch gekennzeichnet, dass** er aus folgenden Bestandteilen besteht:

   a) ein auf der gesamten Länge des Kreislaufes, bei welchem die Hydrolysereaktion der Alkaliborhydride erfolgt, angelegtes Magnetfeld;
   b) ein Katalysator bestehend aus einem Material wie Eisen, Kobalt, Nickel, Gadolinium, Eisen-Chrom-Legierungen, Edelstahlserien AISI 100, seltene Erdoxide, Magnetit ($Fe_3O_4$), der im dem Magnetfeld in der obengenannten Kreislauflänge enthalten ist und wodurch die Hydrolysereaktion der Alkaliborhydride beschleunigt wird;
   c) eine Lösung aus Alkalimetallborhydrid und Alkalihydroxid, welche in oben genanntem Kreislauf fließt.

2. Vorrichtung nach Anspruch 1, **dadurch gekennzeichnet, dass** der Katalysator aus Pulver, Kabeln, Fasern, Folie oder Streifen besteht.

3. Vorrichtung nach Anspruch 1 und 2, **dadurch gekennzeichnet, dass** der besagte Katalysator aus einem Pulver mit einer Körnung von 1 bis 50 Mikrometer Durchmesser besteht.

4. Vorrichtung nach Anspruch 1, **dadurch gekennzeichnet, dass** das angelegte Magnetfeld durch einen oder mehrere Dauermagneten oder durch eine Elektromagnetspule erzeugt wird.

5. Vorrichtung nach Anspruch 1 und 4, **dadurch gekennzeichnet, dass** sie mechanische und / oder elektromechanische Systeme enthält, um die Intensität und die Richtung des angelegten Magnetfeldes zeitlich zu verändern, wobei das besagte mechanische und / oder elektromechanische System an den Dauermagneten eine anhaltende oder unstetige Bewegung überträgt, wodurch sie an ihrer Position hin- und herschwanken und / oder schwingen.

6. Vorrichtung nach Ansprüchen 1, 4 und 5, **dadurch gekennzeichnet, dass** das besagte, auf der Länge des Kreislaufes angelegte Magnetfeld über eine ausreichende Intensität verfügt, um den Katalysator in der oben angegebenen Länge aufzunehmen, wobei die besagten mechanischen und / oder elektromechanischen Systeme das besagte Magnetfeld zu einer anderen Länge bewegen und welche zusammen den Katalysato tragen und einen größeren oder geringeren Kontakt des besagten Katalysators mit der Alkaliborhydridlösung ermöglichen, wobei das besagte Magnetfeld entfernt werden kann, um eine vollständige Herausnahme des Katalysators zu ermöglichen.

7. Vorrichtung nach Ansprüchen 1, 4, 5 und 6, **dadurch gekennzeichnet, dass** sie wässrige Lösungen enthält, wobei die besagten wässrigen Lösungen Alkalien und / oder Alkaliborhydride enthalten.

8. Vorrichtung nach Ansprüchen 1, 4, 5, 6 und 7, **dadurch gekennzeichnet, dass** die besagten wässrigen Lösungen Natriumborhydrid mit Konzentrationen von 0% bis 50% sowie Natriumhydroxid von 0,1% bis 20% enthalten, wobei der übrige Anteil.

9. Vorrichtung nach Ansprüchen 1, 4, 5, 6, 7 und 8, **dadurch gekennzeichnet, dass** die Arbeitstemperatur zwischen -5°C und 100°C liegt.

10. Vorrichtung nach Ansprüchen 1, 2 und 3, **dadurch gekennzeichnet, dass** die Pulverkörner aus einer metallischen Schutzbeschichtung auf dem eisenmagnetischen Trägermaterial bestehen, wobei die besagte metallische Schutzbeschichtung unter den metallischen Elementen und deren Legierungen ausgewählt wird.

11. Vorrichtung nach Ansprüchen 1, 2, 3 und 10, **dadurch gekennzeichnet, dass** die Pulverkörner aus einer katalytischen Oberfläche über der metallischen Beschichtung bestehen, wobei die besagte katalytische Oberfläche unter den Elementen der einzelnen Edelmetalle oder Legierungen ausgewählt wird.

12. Vorrichtung nach Ansprüchen 1, 2, 3, 10 und 11 **dadurch gekennzeichnet, dass** sie zu 80-99% aus Trägermetall besteht sowie zu 1-10% aus einer Schutzbeschichtung und zu 0,1-10% aus einer katalytischen Oberfläche.

**Revendications**

1. Réacteur pour génération d'hydrogène à partir de borohydrures alcalins **caractérisé en ce qu'**il comprend :

a) un champ magnétique appliqué à une longueur de circuit dans lequel la réaction d'hydrolyse des borohydrures alcalins est satisfaite ;

b) un catalyseur composé de matériau tel que du fer, du cobalt, du nickel, du gadolinium, des alliages fer-chrome, de l'acier inoxydable série AISI 400, des oxydes de terre rare, de la magnétite ($Fe_3O_4$) contenue dans le champ magnétique dans la longueur de circuit susmentionnée, qui accélère la réaction d'hydrolyse des borohydrures alcalins ;

c) une solution de borohydrure de métal alcalin et d'hydroxyde alcalin circulant dans le circuit susmentionné.

**2.** Dispositif selon la revendication 1, **caractérisé en ce que** le catalyseur est composé de poudre, de fils, de fibres, de feuille ou de barre.

**3.** Dispositif selon la revendication 1 et 2, **caractérisé en ce que** ledit catalyseur est composé de poudre avec une granulométrie de 1 à 50 microns de diamètre.

**4.** Dispositif selon la revendication 1, **caractérisé en ce que** le champ magnétique appliqué est généré par un ou plusieurs aimants permanents ou par un électro-aimant à bobine.

**5.** Dispositif selon les revendications 1 et 4, **caractérisé en ce qu'**il comprend des systèmes mécaniques et/ou électromécaniques afin de faire varier dans le temps l'intensité et la direction du champ magnétique appliqué, lesdits systèmes mécaniques et/ou électromagnétiques conférant aux aimants permanents un mouvement continu ou discontinu, alternant et/ou oscillant sur leur position.

**6.** Dispositif selon les revendications 1, 4 et 5, **caractérisé en ce que** ledit champ magnétique appliqué sur une longueur de circuit comprend une intensité suffisante pour contenir le catalyseur dans la longueur ci-dessus, lesdits systèmes mécaniques et/ou électromécaniques déplaçant ledit champ magnétique vers une autre longueur portant ensemble le catalyseur et permettant un meilleur contact ou un contact moindre dudit catalyseur avec la solution des borohydrures alcalins, ledit champ magnétique étant amovible afin de permettre l'extraction totale du catalyseur.

**7.** Dispositif selon les revendications 1, 4, 5 et 6, **caractérisé en ce qu'**il comprend des solutions aqueuses, lesdites solutions aqueuses comprenant des alcalis et/ou des borohydrures alcalins.

**8.** Dispositif selon les revendications 1, 4, 5, 6 et 7, **caractérisé en ce que** lesdites solutions aqueuses comprennent du borohydrure de sodium avec des concentrations de 0% à 50% et de l'hydroxyde de sodium avec des concentrations de 0,1% à 20%, le pourcentage restant étant de l'eau.

**9.** Dispositif selon les revendications 1, 4, 5, 6, 7 et 8, **caractérisé en ce que** la température de fonctionnement est comprise entre -5°C et 100°C.

**10.** Dispositif selon les revendications 1, 2 et 3, **caractérisé en ce que** les grains de poudre sont composés d'un placage protecteur métallique sur le matériau de support magnétique ferreux, ledit revêtement protecteur métallique étant choisi parmi les éléments métalliques et leurs alliages.

**11.** Dispositif selon les revendications 1, 2, 3 et 10, **caractérisé en ce que** les grains de poudre sont composés d'une surface catalytique sur le placage métallique, ladite surface catalytique étant choisie parmi les éléments de métaux nobles ou alliages uniques.

**12.** Dispositif selon les revendications 1, 2, 3, 10 et 11, **caractérisé en ce qu'**il comprend 80 à 99% de métal de support, 1 à 10% de placage protecteur, 0,1 à 10% de surface catalytique.

## Fig. 1

H2 / NaBO2 / NaOH / H2O

PERMANENT MAGNET

N

Rh/Pt    Fe

NaBH4 / NaOH / H2O

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6534033 B

- US 6358488 B